Europäisches Patentamt

European Patent Office

Office européen des brevets

(19)

(11) Veröffentlichungsnummer : **0 175 086**
**B1**

(12) **EUROPÄISCHE PATENTSCHRIFT**

(45) Veröffentlichungstag der Patentschrift :
02.11.89

(51) Int. Cl.⁴ : **B 62 J 7/02**

(21) Anmeldenummer : 85109051.4

(22) Anmeldetag : 19.07.85

(54) **Vorderradseitengepäckhalter.**

(30) Priorität : 18.08.84 DE 3430427

(43) Veröffentlichungstag der Anmeldung :
26.03.86 Patentblatt 86/13

(45) Bekanntmachung des Hinweises auf die Patenter-
teilung : 02.11.89 Patentblatt 89/44

(84) Benannte Vertragsstaaten :
AT BE CH DE FR GB IT LI LU NL SE

(56) Entgegenhaltungen :
US—A— 4 350 361

(73) Patentinhaber : **ESGE-Marby GmbH + Co. KG.**
**Braker Strasse 1**
**D-4800 Bielefeld 16 (DE)**

(72) Erfinder : **Belka, Heinrich**
**Uchteweg 3**
**D-4800 Bielefeld 11 (DE)**

(74) Vertreter : **Rüger, Rudolf, Dr.-Ing. et al**
**Webergasse 3 Postfach 348**
**D-7300 Esslingen/Neckar (DE)**

EP 0 175 086 B1

## Beschreibung

Die Erfindung geht aus von einem Vorderradseitengepäckhalter gemäß dem Oberbegriff des Hauptanspruches.

Bei einem bekannten Vorderradseitengepäckhalter enthält die Strebenanordnung je Fahrradseite einen zu einem gleichschenkligen Trapez gebogenen Runddraht, dessen beide freien Enden sich im Bereich der kleineren Basis des Trapezes befinden und durch einen hierzu parallellaufenden angeschweißten Draht miteinander verbunden sind. Es entstehen auf diese Weise zwei in der Gebrauchsstellung des Seitengepäckhalters nach unten konvergierende, vertikal verlaufende Streben, die durch zwei horizontal verlaufende Verbindungsstreben miteinander verbunden sind.

Der die untere Verbindungsstrebe bildende Runddraht ist an der Übergangsstelle zwischen der unteren Verbindungsstrebe und der hinteren, vertikal verlaufenden Verbindungsstrebe nach oben in Richtung auf die dieser vertikalen Strebe gegenüberliegende obere Ecke des Trapezes abgebogen.

Das freie Ende der Verbindungsstrebe ist an der Vorderradgabel in der Nähe der Vorderachse befestigt. Eine weitere Befestigungsstelle des Vorderradseitengepäckträgers befindet sich in der Nähe der oberen Querstrebe an der hinten liegenden Ecke des von dem Runddraht definierten Trapezes.

Diese Art der Befestigung des Seitengepäckträgers zeigt im Gebrauch eine ausgeprägte Schwingneigung um mehrere Achsen. Wegen der praktisch auf einer Geraden liegenden Zweipunktbefestigung des Seitengepäckhalters, die parallel zu einer Strebe der Vorderradgabel verläuft, schwingt der Seitengepäckträger unter Belastung mit seiner vorderen oberen Ecke senkrecht zu der durch das Vorderrad definierten Ebene, wodurch der Geradeauslauf des Fahrrades in gefährlicher Weise beeinträchtigt wird. Außerdem zeigt der Gepäckträger die Tendenz, daß die obere Querstrebe, an der die Gepäcktasche angebracht ist, auf- und abschwingt, was ebenfalls den Geradeauslauf beeinträchtigt. Es ist deswegen bei dem bekannten Gepäckträger noch ein das Vorderrad übergreifender Bügel vorgesehen, der sich in der Nähe der Vorderachse an der Gabel abstützt und an dem die oberen vorderen Ecken der beiden Gepäckträgerrahmen angebracht sind.

Ausgehend hiervon besteht die Aufgabe der Erfindung deswegen darin, einen Vorderradseitengepäckhalter für Fahrräder zu schaffen, der ohne zusätzliche Hilfsverstrebungen hinreichend schwingungsunempfindlich ist.

Diese Aufgabe wird durch die kennzeichnenden Merkmale des Hauptanspruches gelöst.

Weil nämlich die beiden vertikalen Streben an ihrem unteren Ende durch eine Verbindungsstrebe einstückig miteinander verbunden sind, wird an dieser Stelle kein zusätzliches Hilfsmittel benötigt, um überhaupt eine mechanische Verbindung zwischen den vertikalen Streben herzustellen. Es können vielmehr durch das entsprechende Biegen der vertikalen Streben Stützschenkel erzeugt werden, die den Seitengepäckhalter in vertikaler Richtung wesentlich aussteifen und seine Schwingneigung reduzieren. Hierbei wirkt es sich besonders günstig aus, wenn die obere Befestigungseinrichtung in der Nähe der Querstreben angeordnet ist. Bei in Richtung auf die Mitte verlagerter oberer Bebefestigungseinrichtung verringert sich das Trägheitsmoment bezüglich der Hochachse des Seitengepäckhalters.

Dabei wird die Befestigung besonders einfach, wenn die untere Befestigungsstelle eine zur Achse des Vorderrades parallele Bohrung zur Aufnahme einer Befestigungsschraube aufweist, die beispielsweise in eine Lasche des Ausfallendes der Gabel einschraubbar ist.

Eine noch weitere Verbesserung der Schwingneigung und der Stabilität des Seitengepäckhalters läßt sich erhalten, wenn die Verbindungsstrebe in ihrem mittleren Bereich in Richtung auf die Querstrebe unter Bildung zweier aufwärts ragender Abschnitte nach oben durchgebogen ist, derart, daß die Verbindungsstrebe mit den vertikalen Streben ein « W » bildet, wobei sich die untere Befestigungsstelle an der höchsten Stelle der Verbindungsstrebe befindet. Hierdurch kommt außerdem der Schwerpunkt des Seitengepäckhalters tiefer. Ein tiefer Schwerpunkt des Seitengepäckhalters bedeutet aber eine wesentliche Verbesserung der Fahrsicherheit. Zusätzlich können die beiden aufwärts ragenden Abschnitt an ihren der unteren Befestigungsstelle abgewandten Enden durch eine Verstärkungsstrebe miteinander verbunden sein.

Insgesamt ergeben sich besonders günstige statische und dynamische Verhältnisse, wenn sich die untere Befestigungsstelle etwa zwischen der Mitte und dem unteren Drittel der vertikalen Erstreckung des Seitengepäckhalters befindet und sie außerdem etwa in der Mitte zwischen den vertikalen Streben angeordnet ist. Eine Biegetoleranzen leicht ausgleichende Verankerung der freien Enden der Stützschenkel wird erhalten, wenn die untere Befestigungsstelle ein Verbindungsstück für die der unteren Befestigungsstelle der Stützschenkel benachbarten freien Enden aufweist. Der Toleranzausgleich und die Montage des Verbindungsstückes wird sehr einfach, wenn die der unteren Verbindungsstelle benachbarten freien Enden der Stützschenkel zueinander parallel verlaufen, weil dann in dem Verbindungsstück zwei zueinander parallele Bohrungen angebracht werden können, in denen die freien Enden in der jeweils richtigen Lage zu befestigen sind, die leicht durch entsprechendes Verschieben des Verbindungsstückes auf den freien Enden einstellbar ist. Dies ist besonders wichtig, wenn das Verbindungsstück eine zu den Bohrungen für die Stützschenkel rechtwinklig verlaufende Bohrung aufweist, die mit der Bohrung in der Verbindungsstrebe fluchtet, weil sich so eine sehr einfache Anbringung des Seitengepäckhalters ergibt, die keine zusätzlichen Änderungen an der Gabel des Fahrrades erfordert.

Für die Verankerung der freien Enden in dem Verbindungsstück kommen mehrere Möglichkeiten in Betracht. Entweder sind die Bohrungen für die Stützschenkel ungeschlitzt und jeweils von einer dazu rechtwinklig verlaufenden zylindrischen Stufenbohrung angeschnitten. In dem Abschnitt mit dem größeren Durchmesser der Stufenbohrung sitzt ein kegelstumpfförmiges Klemmglied mit koaxialer Gewindebohrung, in die eine durch den Abschnitt mit dem kleineren Durchmesser führende Kopfschraube einschraubbar ist, so daß das Klemmglied gegen den Stützschenkel gepreßt werden kann. Eine andere Möglichkeit besteht darin, die Bohrungen für die Stützschenkel durchgehend längsgeschlitzt auszuführen und in den freien Enden der Stützschenkel zu den Längsachsen der Stützschenkel rechtwinklig verlaufende Querbohrungen mit Innengewinde anzubringen. In den Querbohrungen, die im montierten Zustand mit dem Längsschlitz der jeweils zugehörigen Bohrung fluchten, ist eine Klemmschraube eingedreht, die sich an der gegenüberliegenden Wand der Bohrung abstützt. Schließlich ist es auch möglich, das Verbindungsstück an den freien Enden der Stützschenkel mittels einer Quetschverbindung zu befestigen, wobei hier sowohl die geschlitzte als auch die ungeschlitzte Ausführung der Aufnahmebohrungen für die Stützschenkel verwendet werden kann. Die geschlitzte Ausführung hat dabei den Vorteil, daß sie bei der Herstellung als Strangpreßprofil kostengünstiger ist und außerdem die Bohrung für die Befestigungsschraube an der unteren Befestigungsstelle durch Lochen angebracht werden kann.

Wenn im montierten Zustand das Verbindungsstück zwischen der Gabel und der Verbindungsstrebe angeordnet ist, bildet die Projektion der Stützschenkel sowie der vertikal verlaufenden Streben und der Verbindungsstrebe auf eine Ebene, die durch die Vorderachse des Vorderrades und die freien Enden der Stützschenkel verläuft, ein Dreieck, das eine beträchtliche Aussteifung der Strebenanordnung bewirkt.

Die Steifigkeit des Seitengepäckhalters in Richtung parallel zu den oberen Querstreben wird verbessert, wenn die Stützschenkel an ihrem den Querstreben benachbarten Ende mit einem oberen Verbindungsstück miteinander verbunden sind, das an den Stützschenkeln starr befestigt ist.

Wenn hierbei die Stützschenkel über ihre gesamte Länge parallel und im Abstand zueinander verlaufen, läßt sich das obere Verbindungsstück ähnlich dem unteren Verbindungsstück ausführen, d. h. es weist zwei durchgehende parallele Aufnahmebohrungen auf, durch die die Stützschenkel hindurchführen, wobei vorzugsweise die Befestigung durch Quetschen ausgeführt wird.

Eine weitere Verbesserung der Steifigkeit bei gleichzeitig recht flexibler Anbringungsmöglichkeit im Bereich der oberen Befestigungsstelle besteht darin, die obere Befestigungseinrichtung als Platte auszubilden, die einerseits an den Querstreben und andererseits an einem den Querstreben benachbarten Abschnitt an den vertikal verlaufenden Streben befestigt, vorzugsweise verschweißt ist. Diese Platte enthält dann wenigstens ein Langloch zur Aufnahme einer Befestigungsschraube. Dieses Langloch erstreckt sich parallel zu den Querstreben.

Eine große Steifigkeit wird aber auch erreicht, wenn die Stützschenkel, ausgehend von ihren freien Enden, in Richtung auf die Querstreben divergieren, und das obere Verbindungsstück als Verstärkungsstrebe ausgebildet ist, die die obere Befestigungseinrichtung bildet, an der verstellbar eine andernends an der Gabel befestigte Stützstrebe angreift. Auch damit ist ohne weiteres eine Anpassung des Seitengepäckhalters an unterschiedliche Gabelformen möglich. Zur Erzielung der Verstellbarkeit enthält die Verstärkungsstrebe im einfachsten Falle ein Langloch, durch das eine durch eine Bohrung in dem Stützglied reichende Befestigungsschraube hindurchführt. Die Verstärkungsstrebe und das Langloch verlaufen deshalb zweckmäßigerweise im wesentlichen parallel zu den Querstreben.

Eine leichte und korrosionsfeste Ausführung des Seitengepäckhalters wird erhalten, wenn der die einstückig miteinander verbindenden Streben bildende Runddraht aus Aluminium besteht.

In der Zeichnung sind Ausführungsbeispiele des Gegenstandes der Erfindung dargestellt. Es zeigen:

Fig. 1 einen Vorderradseitengepäckhalter für ein Fahrrad mit einem Ausschnitt der Vorderradgabel in einer Ansicht von links, bezogen auf das Fahrrad,

Fig. 2 den Vorderradseitengepäckhalter nach Fig. 1 in einer Vorderansicht, geschnitten entlang der Linie II-II nach Fig. 1,

Fig. 3 das Klemmstück für den Seitengepäckhalter nach Fig. 1, geschnitten entlang der Linie III-III nach Fig. 1 in einer Draufsicht,

Fig. 4 ein weiteres Ausführungsbeispiel des Klemmstücks für den Seitengepäckhalter nach Fig. 1 mit längsgeschlitzten Bohrungen,

Fig. 5 das Klemmstück nach Fig. 4, geschnitten entlang der Linie V-V nach Fig. 4 in einer Draufsicht,

Fig. 6 ein weiteres Ausführungsbeispiel eines Vorderradseitengepäckhalters gemäß der Erfindung für ein Fahrrad mit einem Ausschnitt der Vorderradgabel in einer Ansicht von links bezogen auf das Fahrrad,

Fig. 7 den Vorderradseitengepäckhalter nach Fig. 6 in einer Vorderansicht,

Fig. 8 eine Klemmschelle für die obere Befestigungseinrichtung des Seitengepäckhalters nach Fig. 6 und

Fig. 9 das untere Verbindungsstück des Vorderradseitengepäckhalters nach den Fig. 1 oder 6 mit einer zusätzlichen Aufnahmebohrung für den Stützschenkel eines Vorderradgepäckträgers.

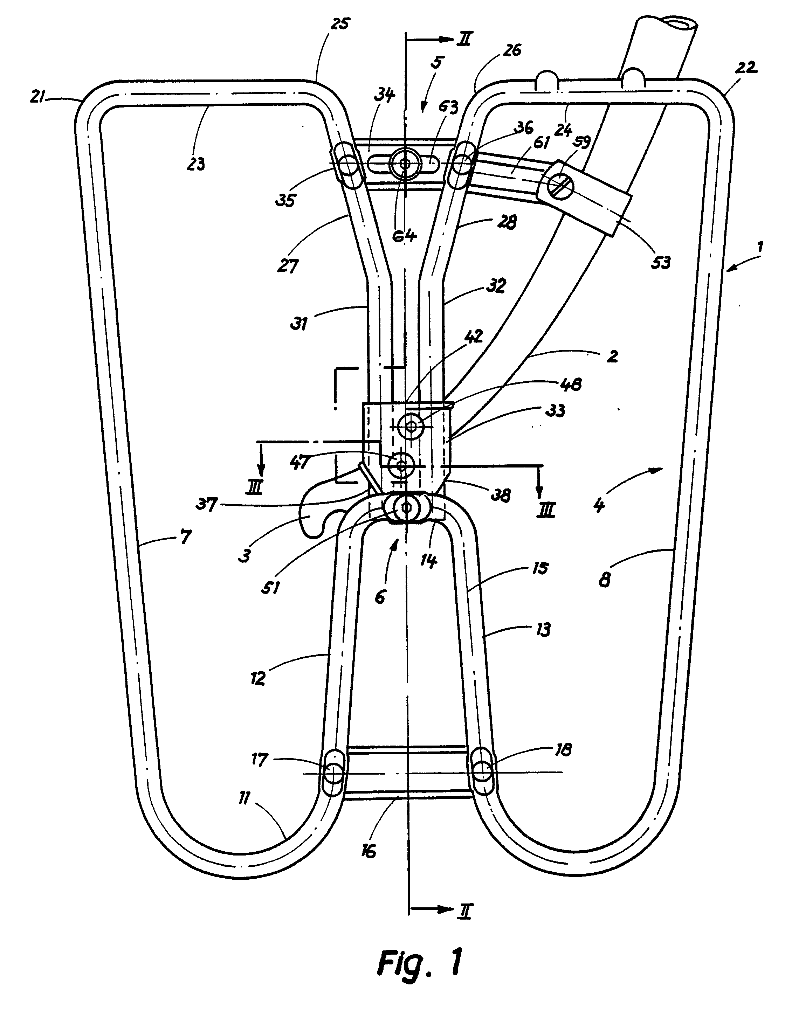

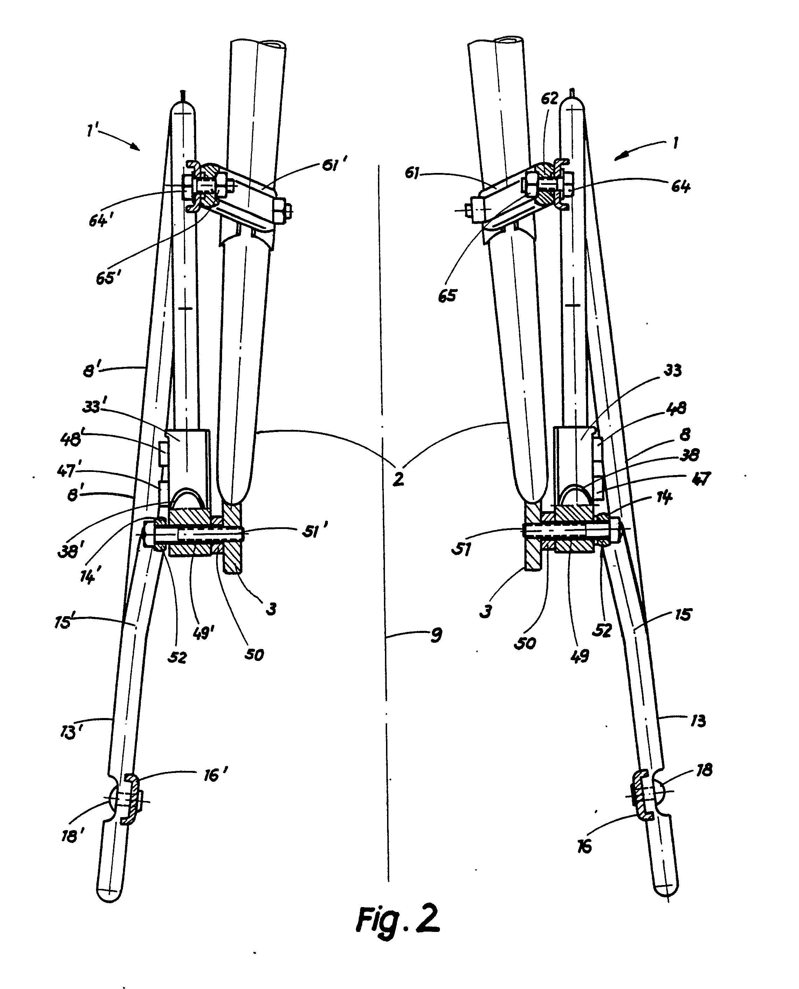

Die Fig. 1 und 2 zeigen einen Vorderradseitengepäckhalter 1, wie er an dem unteren Ende einer ausschnittsweise veranschaulichten Fahrradgabel 2 mit Ausfallende 3 befestigt ist. Aus Gründen einer möglichst symmetrischen Schwerpunktverteilung ist auf der rechten Seite der gezeigten Vorderradgabel 2 ein weiterer Seitengepäckhalter 1' angeordnet, der zu dem Seitengepäckhalter 1 spiegelsymmetrisch ist, sich im übrigen aber von diesem nicht weiter unterscheidet, weshalb die nachfolgende Beschreibung auf den Seitengepäckhalter 1 beschränkt ist und sinngemäß auch für den Seitengepäckhalter 1' gilt.

Der Seitengepäckhalter 1 weist einen Rahmen oder eine Strebenanordnung 4 auf, die an einer oberen und an einer unteren Befestigungsstelle 5, 6 an der Vorderradgabel 2 befestigt ist und zwei in einer gemeinsamen Ebene liegende, vertikal verlaufende Streben 7 und 8 enthält. Diese durch die Streben 7 und 8 definierte Ebene verläuft etwa parallel zu dem zugehörigen Gabelende, d. h. damit auch etwa parallel zu einer die Vorderachse des Fahrrades rechtwinklig schneidenden Ebene 9, wie dies Fig. 2 zeigt, in der die dem Seitengepäckhalter 1 entsprechenden Bauteile des Seitengepäckhalters 1' mit dem gleichen Bezugszeichen, jedoch mit einem Apostroph gekennzeichnet sind.

An ihrem unteren Ende sind die beiden vertikal verlaufenden und im gezeigten Ausführungsbeispiel nach unten leicht konvergierenden geraden Streben 7 und 8 durch eine Verbindungsstrebe 11 einstückig miteinander verbunden, so daß zwei aufwärts weisende Abschnitte 12 und 13 entstehen, wobei an dem oben liegenden Abschnitt 14 der Verbindungsstrebe 11 die untere Befestigungsstelle 6 vorgesehen ist. Insgesamt bilden damit die vertikalen Streben 7 und 8 zusammen mit der in der gezeigten Weise gebogenen Verbindungsstrebe 11 etwa die Gestalt eines « W », wobei, wie ersichtlich, die beiden gerade verlaufenden vertikalen Streben 7 und 8 mit einem verhältnismäßig großen Krümmungsradius von ca. 2,5 cm in die aufwärts ragenden Abschnitte 12 und 13 der Verbindungsstrebe 11 übergehen. Die aufwärts ragenden Abschnitte 12 und 13 verlaufen bezüglich der in Fig. 1 gezeigten Projektion gerade und konvergieren gerüngfügig in Richtung auf die untere Befestigungsstelle 6. Das obere Drittel der aufwärts ragenden Abschnitte 12 und 13 ist jedoch an einer Stelle 15 aus der durch die beiden vertikalen Streben 7 und 8 definierten Ebene heraus in Richtung auf die Vorderradgabel 2 gebogen, wie dies insbesondere in Fig. 2 zu erkennen ist; der untere Bereich der aufwärts ragenden Abschnitte 12 und 13 liegt hingegen in der gleichen Ebene wie die vertikalen Streben 7 und 8.

Zur Erhöhung der Festigkeit der mehrfach gebogenen Verbindungsstrebe 11 ist an der Stelle, an der sie von den vertikalen Streben 7 und 8 herkommend, in die aufwärts ragenden Abschnitte 12 und 13 übergeht, eine Verstärkungsstrebe 16 aus einem C-förmigen Profil angebracht, die mittels Nieten 17 und 18 mit den aufwärts ragenden Abschnitten 12 und 13 vernietet ist.

An ihrem oberen Ende sind die beiden vertikalen Streben 7 und 8 bei 21 und 22 aufeinander zu umgebogen, derart, daß zwei miteinander fluchtende, gerade verlaufende Querstreben 23 und 24 entstehen, die in der Gebrauchslage möglichst exakt horizontal verlaufen. Bei 25 und 26 sind die beiden Querstreben 23 und 24 ebenfalls, jedoch nach unten unter Ausbildung zweier Stützschenkel 27 und 28 abgebogen, die in Richtung auf ihre freien Enden 31 und 32 konvergieren; die freien Enden 31 und 32 der Stützschenkel 27 und 28 verlaufen parallel zueinander und stecken in einem als Klemmstück ausgebildeten Verbindungsstück 33 der unteren Befestigungsstelle 6.

An ihrem oberen Ende sind die beiden Stützschenkel 27 und 28, die, ausgehend von ihren freien Enden 31 und 32 nach oben divergieren, durch ein weiteres Verbindungsstuck in Gestalt einer C-förmigen Verstärkungsstrebe 34 miteinander verbunden. Die Verstärkungsstrebe 34 bildet die obere Befestigungsstelle 5 und ist mit den Stützschenkeln mittels Nieten 35 und 36 starr verbunden.

Ersichtlicherweise wird die Strebenanordnung 4 des Seitengepäckhalters 1 mit Ausnahme der beiden Verstärkungsstreben 16 und 34 durch Biegen eines geeigneten Halbzeugs hergestellt. Das Halbzeug ist vorzugsweise ein Runddraht oder -rohr mit einem Durchmesser zwischen 5 und 15 mm, je nach gewünschter Festigkeit, wobei zweckmäßigerweise ein korrosionsfestes Metall, beispielsweise eine Aluminiumlegierung oder Edelstahl, zur Anwendung kommt. Es kann auch Stahl oder ähnliches verwendet werden.

Das Verbindungsstück 33 ist ein etwa quaderförmiger Körper, der an seiner unteren Schmalseite bei 37 und 38 abgeschrägt ist. Parallel zu seiner längsten Erstreckung enthält das Verbindungsstück 33 zwei zueinander parallele, ungeschlitzte Durchgangsbohrungen zur Aufnahme der freien Enden 31 und 32 der beiden Stützschenkel 27 und 28. Die ungeschlitzten Durchgangsbohrungen 39 und 41 beginnen an der Oberseite 42 des Klemmstücks 33 und treten durch die Schrägflächen 37 und 38 an der Unterseite aus.

Zum Klemmen des freien Schenkels 31 ist in dem Verbindungsstück 33 eine zylindrische Stufenbohrung 43 angebracht, die rechtwinklig zu der Durchgangsbohrung 39 verläuft. Mit ihrem Abschnitt 44 mit größerem Durchmesser schneidet die Stufenbohrung 43 die Durchgangsbohrung 39 und zum Festklemmen des freien Schenkels 31 sitzt in diesem Abschnitt 44 ein kegelstumpfförmiges Klemmglied 45, das eine koaxiale Gewindebohrung 46 enthält, wie dies Fig. zeigt. In die Gewindebohrung 46 ist eine Inbuskopfschraube 47 eingedreht, die durch den Abschnitt mit kleinerem Durchmesser der Stufenbohrung 43 hindurchführt und sich mit ihrem Kopf an der Außenseite des Verbindungsstücks 33 abstützt. Sobald die Inbusschraube 47 angezogen wird, drückt das kegelstumpfförmige Klemmglied 45 den freien Schenkel 31 an die gegenüberliegende Innenwand der Durchgangsbohrung 39, der auf diese Weise festgehalten wird. Zum Festklemmen des freien Endes 32 des Stützschenkels 28 ist in dem Verbindungsstück 33 eine der Stufenbohrung 43 entsprechende weitere Stufenbohrung angebracht, die jedoch die Durchgangsbohrung 41 schneidet und in der ein entsprechendes kegelstumpfförmiges Klemmglied sitzt, das mittels einer Inbusschraube 48 angezogen wird.

Unterhalb der beiden Inbusschrauben 47 und 48 ist in dem Verbindungsstück 33 eine weitere zylindrische Bohrung 49, siehe Fig. 2, vorgesehen, die ebenfalls rechtwinklig zu den beiden Durchgangsbohrungen 39 und 41 verläuft und der Aufnahme einer Befestigungsschraube 51 dient, die zum Anbringen des Seitengepäckhalters 1 in eine entsprechende Gewindebohrung des Ausfallendes 3 der Gabel 2 eingeschraubt wird. Mit der zylindrischen Durchgangsbohrung 49 in dem Verbindungsstück 33 fluchtet eine Durchgangsbohrung 52, die sich in dem Abschnitt 14 der Verbindungsstrebe 11 befindet.

An der unteren Verbindungsstelle 6 werden deshalb mittels der Befestigungsschraube 51 sowohl die Verbindungsstrebe 11 als auch die beiden freien Enden 31 und 32 der Stützschenkel 27 und 28 unter Zuhilfenahme des Verbindungsstücks 33 befestigt. Diese untere Befestigungsstelle 6 befindet sich in der Mitte zwischen den beiden vertikal verlaufenden Streben 7 und 8 und auch etwa in der Mitte der Höhenerstreckung des Seitengepäckhalters 1. Da, wie Fig. 2 zeigt, die beiden Stützschenkel 27 und 28 entsprechend der Abwinkelung der aufwärts ragenden Abschnitte 12 und 13 und der Dicke des Klemmstücks 33 nach innen zu aus der Ebene der beiden vertikalen Streben 7 und 8 herausgebogen sind, ergibt sich eine etwa dreieckförmige Projektion, die eine erhöhte Steifigkeit aufweist.

Zur Montage des Seitengepäckhalters 1 wird zunächst das Verbindungsstück 33 auf die beiden freien Enden 31 und 32 der im übrigen fertig gebogenen und mit den Verstärkungsstreben 16 und 34 vernieteten Strebenanordnung 4 aufgeschoben, und zwar so weit, bis die Bohrung 49 des Verbindungsstücks 33 mit der Bohrung 52 fluchtet. In dieser Stellung werden die beiden Inbusschrauben 47 und 48 angezogen, wodurch die freien Enden 31 und 32 mittels der Klemmglieder 45 in dem Verbindungsstück 33 festgeklemmt werden. Nunmehr wird der Seitengepäckhalter 1 durch die Schraube 51 an dem Ausfallende 3 der Gabel 2 angeschraubt, wobei gegebenenfalls zwischen dem Verbindungsstück 33 und dem Ausfallende 3, wie gezeigt, ein Distanzstück 50 eingefügt werden kann, falls dies die Form der Gabel 2 erforderlich macht. Der Seitengepäckhalter 1 ist damit an seiner unteren Befestigungsstelle 6 an der Gabel 2 verankert.

Zum Verankern an der oberen Befestigungsstelle 5 wird auf die Gabel 2 eine entsprechende Schelle 53 aufgesetzt, an der mittels einer Schraube 54 eine Stützstrebe 61 angebracht wird. Die Stützstrebe 61 enthält in ihrem vorderen Ende ein Langloch 62, das durch Verschwenken der Stützstrebe 61 und Verschieben der Schelle 53 so ausgerichtet wird, daß das Langloch 62 hinreichend mit einem Langloch 63 der oberen Verstärkungsstrebe 34 fluchtet, um eine weitere Befestigungsschraube 64 durch die beiden aufeinander ausgerichteten Langlöcher 62 und 63 hindurchzuschieben. Die Befestigungsschraube 64 wird mittels einer Gegenmutter 65 angezogen. Der Seitengepäckhalter 1 ist damit auch an seiner oberen Befestigungsstelle 5 mit der Fahrradgabel 2 fest verbunden, wobei die Querstreben 23 und 24 exakt horizontal verlaufen.

Die bezüglich der Außenabmessung des Seitengepäckhalters 1 zentrale Anordnung der unteren Befestigungsstelle 6 ergibt besonders kurze Hebelverhältnisse, die Schwingungen des Seitengepäckhalters 1 wirksam unterdrücken. Darüber hinaus liegt die Stoßstelle für die beiden Enden der ansonsten ungeschnitten Strebenanordnung 4 ebenfalls in diesem Bereich, was zu günstigen Kräfteverhältnissen an der Stoßstelle führt. Außerdem können Fertigungstoleranzen, die beim Biegen entstehen, leicht durch Verschieben des Verbindungsstücks 33 ausgeglichen werden.

Dadurch, daß schließlich die beiden Stützschenkel 27 und 28 in der Mitte des Seitengepäckhalters 1 abgehen und unmittelbar zur unteren Befestigungsstelle 6 führen, wo ebenfalls die hochgezogene Verbindungsstrebe 11 angreift, wird das Entstehen von Vertikalschwingungen verhindert, und zwar auch dann, wenn die Straßenoberfläche extrem uneben ist, beispielsweise bei Kopfsteinpflaster. Drehschwingungen unterdrückt die obere Befestigungseinrichtung 5, die sich im Abstand zur unteren Befestigungsstelle 6 befindet.

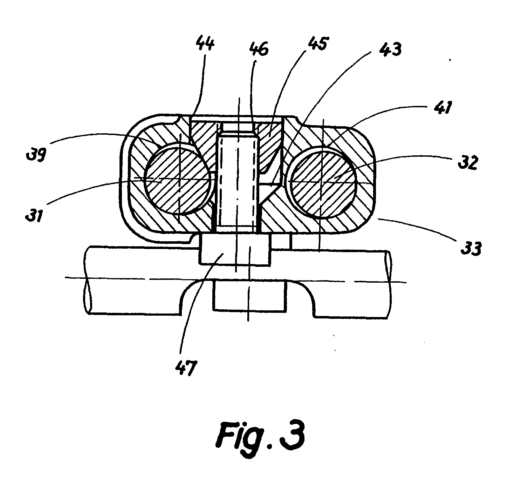

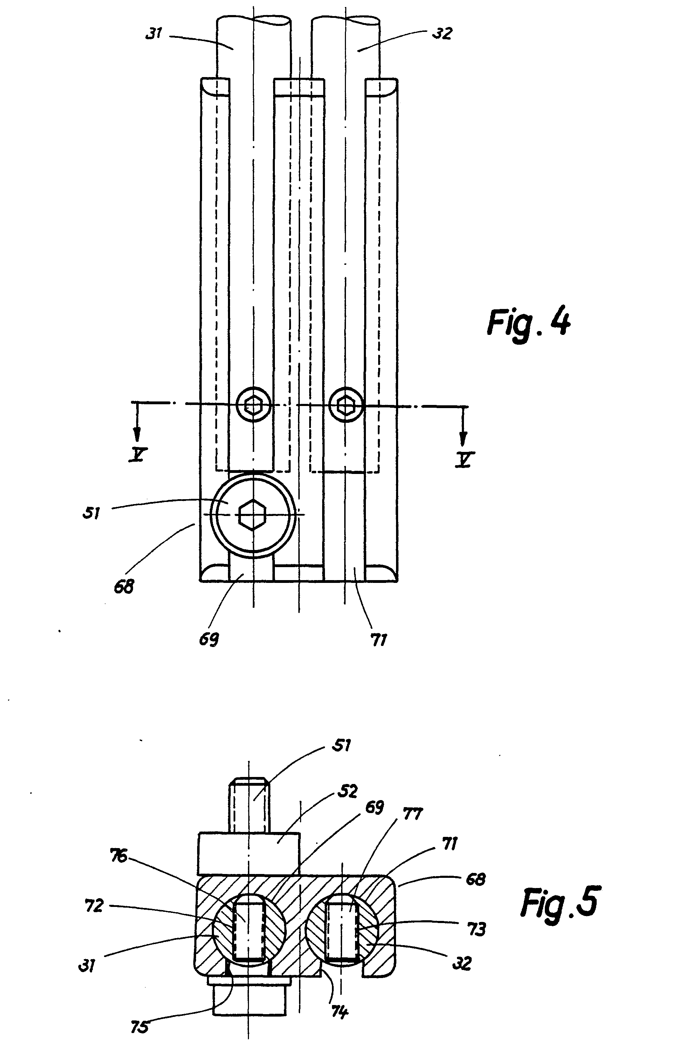

Alternativ zu dem in den Fig. 1 bis 3 gezeigten Verbindungsstück 33 kann auch das in den Fig. 4 und 5 veranschaulichte Verbindungsstück 68 verwendet werden, das ebenfalls aus einem etwa quaderförmigen Körper besteht, der zwei parallel zu seiner Längserstreckung verlaufende, geschlitzte Durchgangsbohrungen 69 und 71 enthält. In diesen beiden längsgeschlitzten Durchgangsbohrungen 69 und 71 stecken die freien Enden 31 und 32 der Stützschenkel 27 und 28. Zum Zwecke des Festklemmens der freien Enden 31 und 32 in dem Klemmkörper 68 enthalten beide freien Enden 31 und 32 im Bereich ihres in dem Klemmkörper 68 steckenden Abschnitts Gewindebohrungen 72 und 73, die rechtwinklig zu der Längsachse der freien Enden 31 und 32 verlaufen und mit den durch das Längsschlitzen der beiden Bohrungen 69 und 71 entstehenden Schlitzen 74 und 75 fluchten. In die Gewindebohrungen 72 und 73 sind Stiftschrauben mit Innensechskant eingedreht, deren Länge etwa dem Durchmesser der freien Schenkel 31 und 32 entspricht.

Zum Anschrauben des Verbindungsstücks 68 dient eine in den Figuren nicht sichtbare Durchgangsbohrung, die rechtwinklig zu der Bohrung 69 und fluchtend mit dem zugehörigen Längsschlitz 75 verläuft; in dieser Bohrung steckt die Befestigungsschraube 51.

Das Anbringen des Verbindungsstücks 68 erfolgt in der Weise, daß nach dem Eindrehen der Stiftschrauben 76 und 77 in die freien Enden 31 und 32 der Stützschenkel 27 und 28 diese in die Durchgangsbohrungen 69 und 71 eingeführt werden. Hierauf wird das Klemmstück 68 so lange längsverschoben, bis die Bohrung für die Befestigungsschraube 51 mit der Bohrung 52 in dem Abschnitt 14 fluchtet. Sodann werden die beiden Stiftschrauben 72 und 73 mittels eines Betätigungswerkzeuges, das durch die Längsschlitze 74 und 75 in den Innensechskant der Stiftschrauben 76 und 77 eingeführt werden kann, gegen die den beiden Längsschlitzen 74 und 75 gegenüberliegende Innenwandung der Durchgangsbohrung 69 und 71 festgezogen.

Der Vorteil dieses Klemmstücks 68 besteht darin, daß es sich leicht durch Ablängen eines entsprechenden Strangpreßprofils herstellen lassen kann.

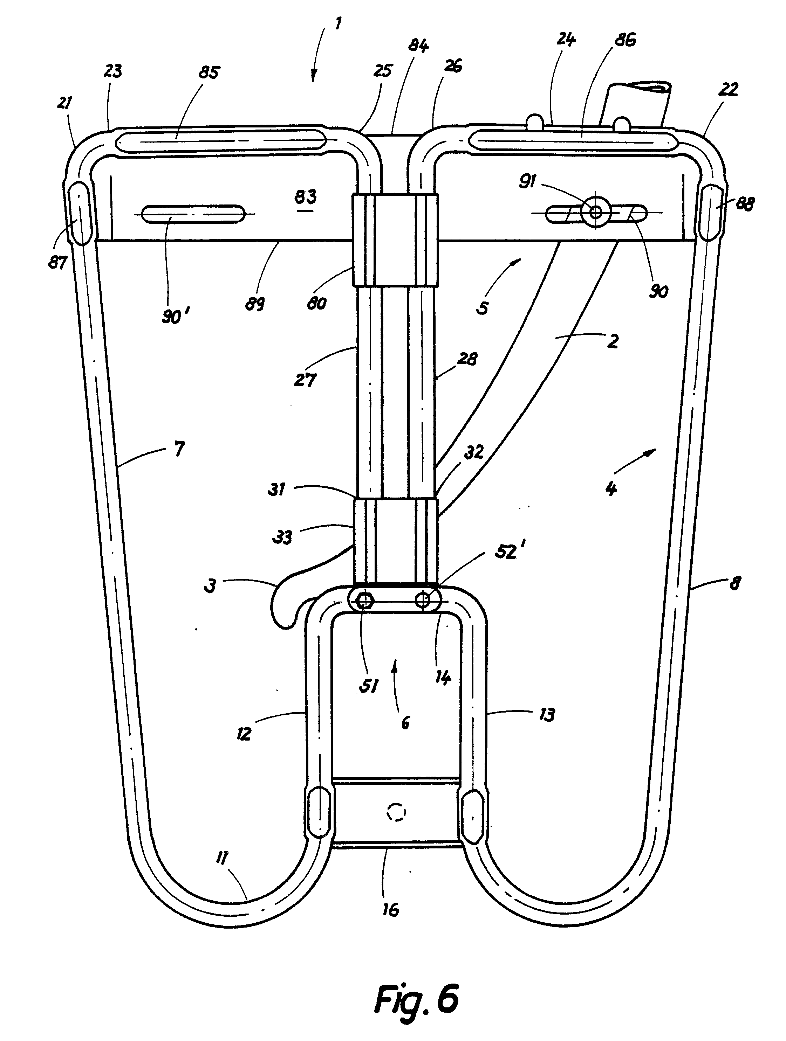

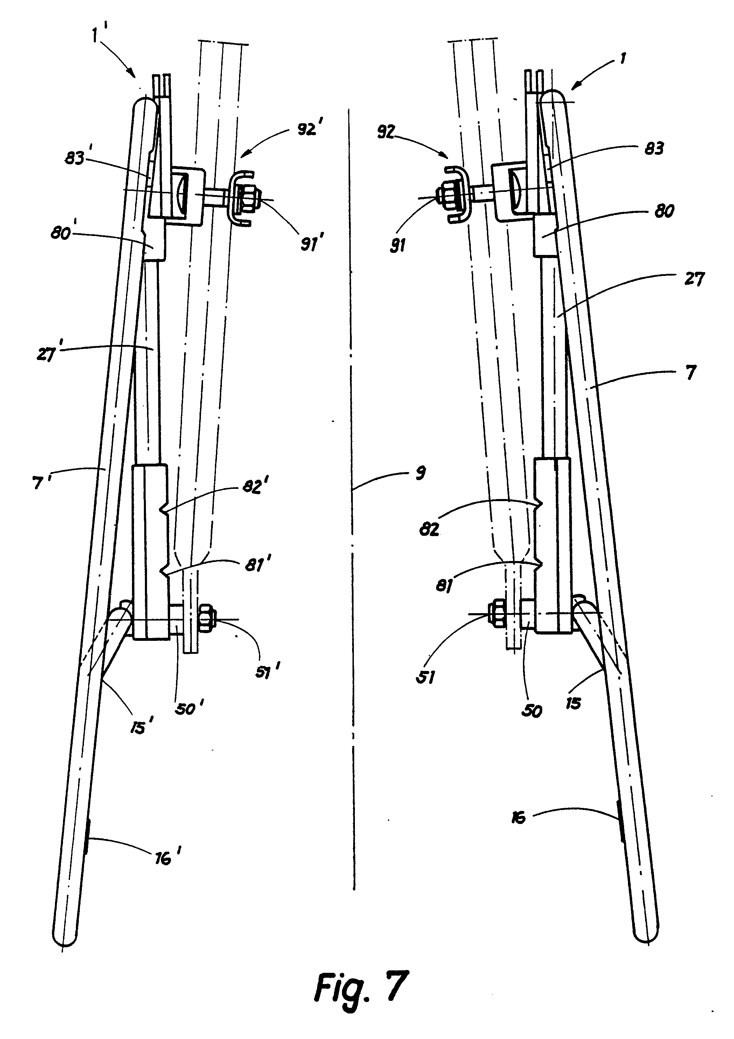

In den Fig. 6 bis 8 ist ein weiteres Ausführungsbeispiel des Vorderradseitengepäckhalters 1 veranschaulicht, der sich von dem vorherigen Ausführungsbeispiel im wesentlichen durch die Ausbildung der oberen Befestigungsstelle 5 unterscheidet. Bauelemente, die sich bei dem vorherigen Ausführungsbeispiel wiederfinden, sind mit denselben Bezugszeichen versehen und nicht im einzelnen erneut beschrieben.

Auch bei Fig. 6 hat die Strebenanordnung, bestehend aus einem geeigneten Runddraht, im wesentlichen die Form eines « W », wobei jedoch die aufwärts ragenden Abschnitte 12 und 13 der Verbindungsstrebe 11 im wesentlichen parallel zueinander verlaufen und die Verstärkungsstrebe 16 anstelle von Nieten durch Schweißen stoffschlüssig angebracht ist. Die untere Verbindungsstelle 6 ist, bezogen auf die vertikale Erstreckung, weniger weit in Richtung auf die geometrische Mitte des Seitengepäckhalters 1 verschoben und befindet sich etwa zwischen der Mitte und dem unteren Drittel des Seitengepäckhalters 1.

Ferner laufen die Stützschenkel 27 und 28 über ihre gesamte vertikale Erstreckung parallel im Abstand nebeneinander her, weshalb auch die Biegestellen 25 und 26, an denen die beiden Querstreben 23 und 24 unter Ausbildung der Stützschenkel 27, 28 abgebogen sind, entsprechend dicht beieinander liegen. Es ist auf diese Weise möglich, anstelle der Verbindungsstrebe 34 ein Verbindungsstück 80 zu verwenden, das denselben Querschnitt aufweist wie das Verbindungsstück nach Fig. 5. Das Verbindungsstück 80 enthält dementsprechend im Abstand zueinander zwei parallele längsgeschlitzte Bohrungen 69 und 71, durch die die parallelen Stützschenkel 27 und 28 hindurchführen. Die starre Befestigung des Verbindungsstücks 80 mit den Stützschenkeln 27 und 28 erfolgt mittels einer Quetschverbindung, d. h. das Verbindungsstück 80 ist in der jeweils richtigen Stellung an die Stützschenkel 27 und 28 angequetscht.

Das Verbindungsstück 80 kann auch, abweichend, mit ungeschlitzten Durchgangsbohrungen 69 und 71 ausgeführt sein, wobei dennoch die Quetschverbindung zur Anwendung kommt. Die geschlitzte Ausführungsform hat den Vorteil des etwas preisgünstiger herstellbaren Strangpreßprofils, von dem das Verbindungsstück 80 abgelängt wird.

Das untere Verbindungsstück 33 hat hingegen dieselbe Form, wie es in den Fig. 4 und 5 im Zusammenhang mit dem Ausführungsbeispiel nach Fig. 1 dargestellt und erläutert ist. Die starre Befestigung des Verbindungsstücks 33 auf den Stützschenkeln 27 und 28 erfolgt bei Fig. 6 ebenfalls über eine Quetschverbindung, weshalb die unteren Enden der Stützschenkel 27, 28 keine Innengewinde 72, 73 mit Stiftschrauben 76, 77 zu enthalten brauchen. Das Anquetschen erfolgt bei der Fertigung, wenn die in dem Verbindungsstück 33 angebrachte Querbohrung für die Befestigungsschraube 51 mit der Bohrung 52 in dem Abschnitt 14 der Verbindungsstrebe 11 fluchtet.

Das Quetschen kann beispielsweise durch das Einprägen zweier Kerben 81 und 82 erfolgen.

Wenn für die Verbindungsstücke 33 und 80 die längsgeschlitzte Ausführungsform, wie in den Fig. 4 und 5 dargestellt, verwendet wird und diese Verbindungsstücke, wie beschrieben, angequetscht werden, ist es vorteilhaft, wenn die zu den Durchgangsbohrungen 69 und 71 parallel verlaufenden Seitenwände in die Richtung der Längsschlitze 74 und 75 etwas konvergieren. Es kann dann beim Quetschen ein Gegenstück verwendet werden, das beim Quetschen ein Aufweiten der Längsschlitze 74, 75 wirksam verhindert, ohne daß die Gefahr besteht, daß sich das verformte Verbindungsstück 33, 80 in dem Werkzeug verklemmt.

Die obere Befestigungsstelle 5 enthält eine streifenförmige oder längliche Platte 83, die auf der der Gabel 2 benachbarten Seite der Strebenanordnung 4 vorgesehen ist. Die längliche Platte 83, die sich von der vertikalen Strebe 7 bis zur vertikalen Strebe 8 erstreckt, ist an ihrer oberen Kante 84 durch Punktschweißen mit den Querstreben 23 und 24 verbunden. Die Kanten an den Schmalseiten der Platte 83 sind außerdem über weitere Punktschweißverbindungen an den den Querstreben 23, 24 benachbarten Abschnitten der beiden vertikal verlaufenden Streben 7 und 8 stoffschlüssig befestigt. Zum Erleichtern der Punktschweißungen sind die Querstreben 23 und 24 sowie die Streben 7 und 8 an den entsprechenden Bereichen bei 85, 86, 87 und 88 entsprechend abgeplattet.

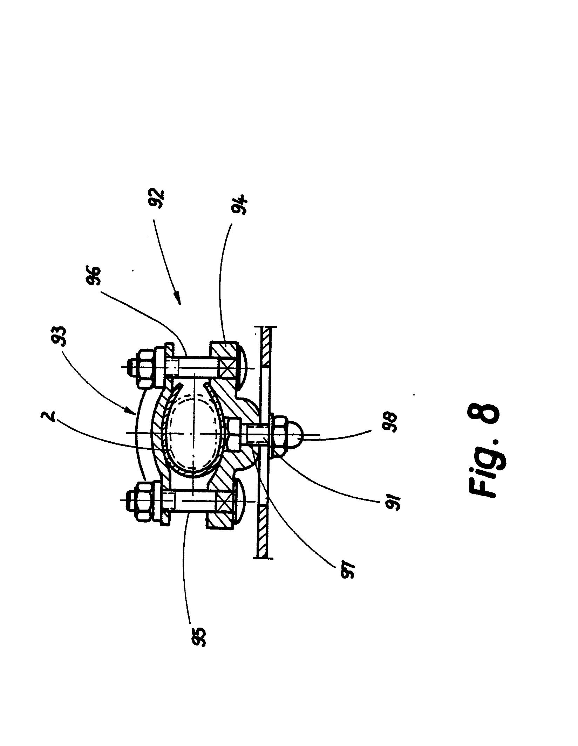

Neben ihrer unteren Kante 89 enthält die Platte 83 ein Langloch 90, das sich parallel zur Querstrebe 24 erstreckt und neben der Strebe 8 befindet. Das Langloch 90 dient der Aufnahme einer Befestigungsschraube 91 für eine in Fig. 8 im Querschnitt gezeigte Schelle 92. Damit der Seitengepäckträger 1 auch ohne weiteres für die andere Fahrradseite verwendet werden kann, ist neben der Strebe 7 ein weiteres Langloch 90' angebracht, das in seiner Lage dem Langloch 90 entspricht ; aus dem gleichen Grund kann auch in dem Abschnitt 14 der Verbindungsstrebe 11 eine weitere Befestigungsöffnung 52' sowie eine entsprechende Bohrung in dem Verbindungsstück 33 angebracht sein.

Je nach Dicke des Verbindungsstücks 80 und seiner Lage auf den Stützschenkeln 27 und 28 ist die Platte 83 zumindest im Bereich des Verbindungsstücks 80 tiefgezogen, um ohne Spannung hinter dem Verbindungsstück 80 vorbeizugelangen.

Abweichend von dem dargestellten Ausführungsbeispiel besteht auch die Möglichkeit, als Verbindungsstück für die beiden Stützschenkel 27 und 28 unmittelbar die Platte 83 heranzuziehen, die dann in ihrem Überdeckungsbereich mit den Stützschenkeln 27 und 28 an diesen beispielsweise durch Punktschweißen angeschweißt wird, wie es im Zusammenhang mit den vertikal verlaufenden Streben 7 und 8 beschrieben ist. Um hierbei die Festigkeit zu erhöhen, kann in die Platte 83 eine parallel zu den Querstreben 23, 24 verlaufende Sicke eingeprägt sein.

Die Schelle 92 besteht aus zwei etwa schalenförmigen Teilen 93 und 94, die in ihrer Form ungefähr dem Querschnitt der Gabel 2 angepaßt sind und mittels zweier durch entsprechende Bohrungen hindurchführender Schloßschrauben (Flachrundschraube mit Vierkantansatz) 95 und 96 zusammengespannt sind. Zwischen den beiden Schloßschrauben 95 und 96 ist in dem Schellenteil 94 eine weitere Bohrung 97 angebracht, in der die Befestigungsschraube 91 sitzt, wobei eine sechskantförmige Ausnehmung an der Innenseite des Schellenteils 94 ein Mitdrehen der Sechskantschraube 91 verhindert, wenn deren Gegenmutter 98 beim Montieren aufgeschraubt und festgezogen wird.

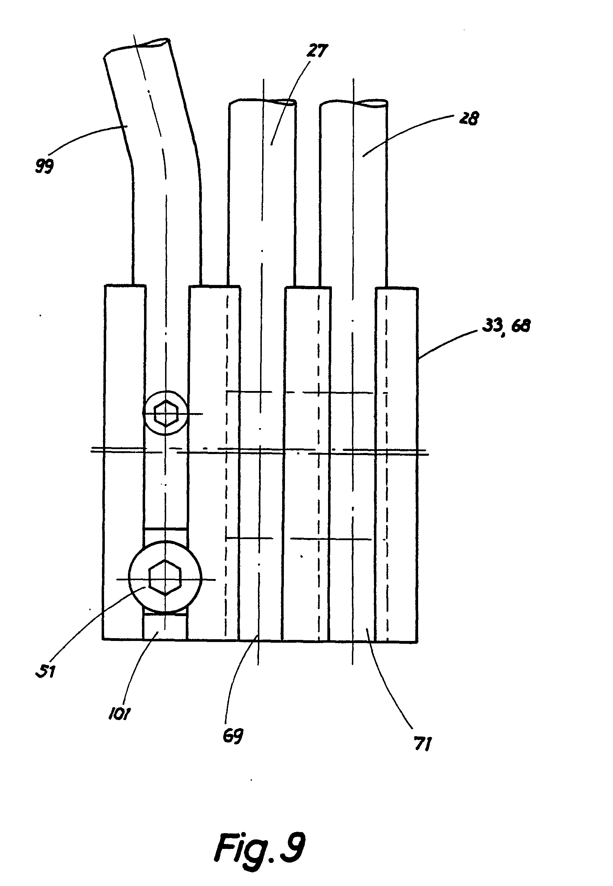

Falls zusätzlich zu dem vorstehend beschriebenen Seitengepäckhalter ein Vorderradgepäckträger montiert werden soll, ist es zweckmäßig, wenn das Verbindungsstück 33 bzw. 68 zur Aufnahme einer entsprechenden Gepäckträgerstrebe 99 eine weitere zu den Bohrungen 69, 71 bzw. 39, 41 parallellaufende weitere Durchgangsbohrung 101 enthält, wie dies Fig. 9 zeigt. Die Befestigungsschraube 51 führt hier durch eine entsprechende rechtwinklig zu der Aufnahmebohrung 101 verlaufende Bohrung. Die Klemmung der Stützstrebe 99 des Vorderradgepäckträgers geschieht in der Weise, wie es anhand der Fig. 4 und 5 für die Stützschenkel 27 und 28 erläutert ist.

Es versteht sich, daß bei allen Ausführungsbeispielen die aufwärtsragenden Abschnitte 12 und 13 der Verbindungsstrebe 11 auf keinen Fall nach außen, bezüglich der Fahrradlängsachse, aus der durch die vertikalen Streben 7 und 8 aufgespannten Ebene herausstehen, was sonst ein Abheben des Gepäcks von den Streben 7 und 8 zur Folge hätte.

Um die Stabilität der Gepäckauflage auf den vertikalen Streben 7 und 8 zu verbessern, läuft die durch diese beiden Streben 7 und 8 aufgespannte Ebene vorzugsweise unter einem geringen Winkel von ca. 6° gegenüber der Vertikalen bei senkrecht stehendem Fahrrad. Das auf dem Seitengepäckhalter 1 befestigte Gepäck wird so mit einer kleinen Kraftkomponente gegen die vertikalen Streben 7 und 8 gedrückt, da ihr unteres Ende geringfügig weiter von der Fahrradmitte entfernt ist als die beiden Querstreben 23 und 24.

Diese Neigung wird üblicherweise durch die nicht parallellaufenden Gabelenden 2 in hinreichender Weise sichergestellt. Sollte die Schrägneigung der Gabelenden 2 nicht ausreichen, läßt sich die Neigung des Seitengepäckhalters 1 durch die Wahl der Dicke des Verindungsstücks 3 bzw. des Distanzstücks 50 einstellen.

Falls der Seitengepäckhalter 1 an der Vorderradgabel an denjenigen Befestigungsöffnungen angebracht wird, die die Stützstreben für das Radschutzblech aufnehmen, besteht die Möglichkeit, in der Verstärkungsstrebe 16 eine entsprechende Bohrung 100 vorzusehen, die dann zur Halterung der Stützstreben des vorderen Radschutzbleches dient.

## Patentansprüche

1. Vorderradseitengepäckhalter für Fahrräder, bestehend aus einer Strebenanordnung, die zwei in der Gebrauchsstellung im wesentlichen vertikal und zu einer die Vorderachse des Fahrrades rechtwinklig schneidenden Ebene etwa parallel verlaufende Streben sowie eine untere und eine obere Befestigungseinrichtung aufweist, mit denen die Strebenanordnung an dem jeweils benachbarten Schenkel der Vorderradgabel an zwei Stellen zu befestigen ist, von denen sich die eine bei der Vorderachse und die andere darüber und im Abstand dazu befindet, dadurch gekennzeichnet, daß die beiden vertikalen Streben (7, 8) an ihrem unteren Ende durch eine Verbindungsstrebe (11) einstückig miteinander verbunden sind, die die untere Befestigungseinrichtung (6) trägt, daß die beiden vertikalen Streben (7, 8) an ihrem oberen Ende unter Bildung zweier miteinander fluchtender Querstreben (23, 24) umgebogen sind, die wiederum an ihrem freien Ende unter Bildung zweier Stützschenkel (27, 28) in Richtung auf die untere Befestigungseinrichtung (6) zu abgebogen sind, an der die Stützschenkel (27, 28) verankert sind, daß die obere Befestigungseinrichtung (5) in der Nähe der Querstreben (23, 24) angeordnet ist und daß die Verbindungsstrebe (11) in ihrem mittleren Bereich in Richtung auf die Querstreben (23, 24) unter Bildung zweier aufwärts ragender Abschnitte (12, 13) nach oben durchgebogen ist, derart, daß die Verbindungsstrebe (11) mit den vertikalen Streben (7, 8) ein « W » bildet, wobei sich die untere Befestigungsstelle (6) an der höchsten Stelle (14) der Verbindungsstrebe (11) befindet.

2. Seitengepäckhalter nach Anspruch 1, dadurch gekennzeichnet, daß die untere Befestigungsstelle (6) eine zur Achse des Vorderrades parallele Bohrung (52) zur Aufnahme einer Befestigungsschraube (51) aufweist.

3. Seitengepäckhalter nach Anspruch 1, dadurch gekennzeichnet, daß die beiden aufwärts ragenden Abschnitte (12, 13) an ihrem der unteren Befestigungsstelle (6) abgewandten Ende durch eine Verstärkungsstrebe (16) miteinander verbunden sind.

4. Seitengepäckhalter nach Anspruch 1, dadurch gekennzeichnet, daß sich die untere Befestigungsstelle (6) etwa zwischen der Mitte und dem unteren Drittel der vertikalen Erstreckung des Seitengepäckhalters (1) befindet.

5. Seitengepäckhalter nach Anspruch 1, dadurch gekennzeichnet, daß sich die untere Befestigungsstelle (6) in der Mitte zwischen den vertikalen Streben (7, 8) befindet.

6. Seitengepäckhalter nach Anspruch 1, dadurch gekennzeichnet, daß die untere Befestigungsstelle (6) ein Verbindungsstück (33, 68) für die Halterung der der unteren Befestigungsstelle (6) der Stützschenkel (27, 28) benachbarten freien Enden (31, 32) aufweist.

7. Seitengepäckhalter nach Anspruch 6, dadurch gekennzeichnet, daß die der unteren Verbindungsstelle (6) benachbarten freien Enden (31, 32) der Stützschenkel (27, 28) im Abstand zueinander parallel verlaufen, und daß das Verbindungsstück (33, 68) zwei im Abstand zueinander parallele Bohrungen (39, 41, 69, 71) enthält, in denen die freien Enden (31, 32) der Stützschenkel (27, 28) befestigt sind.

8. Seitengepäckhalter nach Anspruch 7, dadurch gekennzeichnet, daß die Bohrungen (39, 41) für die Stützschenkel (28, 29) ungeschlitzt und jeweils von einer dazu rechtwinklig verlaufenden zylindrischen Stufenbohrung (43) angeschnitten sind, in deren Abschnitt (44) mit dem größeren Durchmesser ein kegelförmiges Klemmglied (45) mit koaxialer Gewindebohrung (46) sitzt, in die eine durch den Abschnitt mit dem kleineren Durchmesser führende Kopfschraube (47) einschraubbar ist, die das Klemmglied (45) gegen den Stützschenkel (31, 32) preßt.

9. Seitengepäckhalter nach Anspruch 7, dadurch gekennzeichnet, daß die Bohrungen (69, 71) für die Stützschenkel (27, 28) durchgehend längsgeschlitzt sind und daß die freien Enden (31, 32) der Stützschenkel (27, 28) zu den Längsachsen der Stützschenkel (27, 28) rechtwinklig verlaufende Querbohrungen (72, 73) mit Innengewinde enthalten, die mit dem Längsschlitz (74, 75) der jeweils zugehörigen Bohrung (69, 71) fluchten und in die eine an der gegenüberliegenden Innenwand der Bohrung (69, 71) sich abstützende Klemmschraube (76, 77) eingedreht ist.

10. Seitengepäckhalter nach Anspruch 7, dadurch gekennzeichnet, daß das Verbindungsstück (33, 68) an den freien Enden der Stützschenkel (27, 28) unlösbar starr, vorzugsweise mittels einer Quetschverbindung (81, 82) befestigt ist.

11. Seitengepäckhalter nach den Ansprüchen 2 und 7, dadurch gekennzeichnet, daß das Verbindungsstück (33, 68) eine zu den Bohrungen (39, 41, 69, 71) für die Stützschenkel (27, 28) rechtwinklig verlaufende Bohrung (49) aufweist, die mit der Bohrung (52, 52') in der Verbindungsstrebe (11) fluchtet.

12. Seitengepäckhalter nach Anspruch 6, dadurch gekennzeichnet, daß im montierten Zustand das Verbindungsstück (33, 68) zwischen der Gabel (2) und der Verbindungsstrebe (11) angeordnet ist.

13. Seitengepäckhalter nach Anspruch 1, dadurch gekennzeichnet, daß die Stützschenkel (27, 28) an ihrem den Querstreben (23, 24) benachbarten Ende mit einem oberen Verbindungsstück (34, 80, 83) miteinander verbunden sind, das an den Stützschenkeln (27, 28) starr befestigt ist.

14. Seitengepäckhalter nach Anspruch 13, dadurch gekennzeichnet, daß die Stützschenkel (27, 28) über ihre gesamte Länge parallel und im Abstand zueinander verlaufen und das obere Verbindungsstück (80) zwei durchgehende parallele Aufnahmebohrungen enthält, durch die die Stützschenkel (27, 28) hindurchführen, und daß das Verbindungsstück (80) an den Stützschenkeln (27, 28) unlösbar, vorzugsweise mittels einer Quetschverbindung befestigt ist.

15. Seitengepäckhalter nach Anspruch 1, dadurch gekennzeichnet, daß die obere Befestigungseinrichtung (5) eine Platte (83) enthält, die einerseits an den Querstreben (23, 24) und andererseits an einem den Querstreben (23, 24) benachbarten Abschnitt an den vertikal verlaufenden Streben (7, 8) befestigt, vorzugsweise verschweißt ist und die wenigstens ein Langloch (90, 90') zur Aufnahme einer Befestigungsschraube (91) enthält.

16. Seitengepäckhalter nach den Ansprüchen 13 und 15, dadurch gekennzeichnet, daß das obere Verbindungsglied von der Platte (83) gebildet ist.

17. Seitengepäckhalter nach Anspruch 16, dadurch gekennzeichnet, daß das Langloch (90, 90') parallel zu den Querstreben (23, 24) sich erstreckt.

18. Seitengepäckhalter nach Anspruch 1, dadurch gekennzeichnet, daß die Stützschenkel (27, 28), ausgehend von ihren freien Enden (31, 32) in Richtung auf die Querstreben (23, 24) divergieren und das obere Verbindungsstück (34) als Verstärkungsstrebe ausgebildet ist, die die obere Befestigungseinrichtung (5) bildet, an der verstellbar eine andernends an der Gabel (2) befestigte Stützstrebe (61) angreift.

19. Seitengepäckhalter nach Anspruch 18, dadurch gekennzeichnet, daß die Verstärkungsstrebe (34) zur Erzielung der Verstellbarkeit ein Langloch (63) enthält, durch das eine durch eine Bohrung (52) der Stützstrebe reichende Befestigungsschraube (64) hindurchführt.

20. Seitengepäckhalter nach Anspruch 19, dadurch gekennzeichnet, daß die Verstärkungsstrebe (34) und das Langloch (63) im wesentlichen parallel zu den Querstreben (23, 24) verlaufen.

21. Seitengepäckhalter nach Anspruch 1, dadurch gekennzeichnet, daß die einstückig miteinander verbundenen Streben (7, 8, 11, 23, 24, 27, 28, 31, 32) von einem entsprechend gebogenen Runddraht gebildet sind.

22. Seitengepäckhalter nach Anspruch 21, dadurch gekennzeichnet, daß der Runddraht aus einer Aluminiumlegierung besteht.

23. Seitengepäckhalter nach einem der vorhergehenden Ansprüche, dadurch gekennzeichnet, daß das untere Verbindungsstück (33, 68) eine weitere Aufnahmebohrung (101) für eine Stützstrebe (99) eines Vorderradgepäckträgers enthält.

## Claims

1. A front wheel side luggage holder for bicycles, comprising an arrangement of struts which
has two struts extending in the position of use
substantially vertically and substantially parallel
with a plane intersecting the front axle of the
vehicle at right angles, and a lower and upper
attaching device by which the arrangement of
struts can be attached to each particular adjacent
arm of the front wheel fork at two places, of which
one is situated at the front axle and the other
thereabove and at a distance therefrom, characterized in that the two vertical struts (7, 8) are
unitarily interconnected at their lower ends by a
connecting strut (11) which bears the lower
attaching device (6) ; the two vertical struts (7, 8)
are bent over at their top ends to form two aligned
cross struts (23, 24) which are bent at their free
ends to form two supporting arms (27, 28) in the
direction of the lower attaching device (6) to
which the supporting arms (27, 28) are anchored ;
the upper attaching device (5) is disposed adjacent the cross struts (23, 24) ; and in its central
zone the connecting strut (11) is so bent upwards
in the direction of the cross struts (23, 24) to form
two upwardly extending portions (12, 13) that the
connecting strut (11) forms a « W » with the
vertical struts (7, 8), the lower attaching place (6)
being disposed at the highest place (14) of the
connecting strut (11).

2. A side luggage holder according to claim 1,
characterized in that the lower attaching place (6)
has a bore (52) parallel with the front wheel axle
to receive a fixing screw (51).

3. A side luggage holder according to claim 1,
characterized in that the two upwardly extending
portions (12, 13) are interconnected by a reinforcing strut (16) at their ends remote from the lower
attaching place (6).

4. A side luggage holder according to claim 1,
characterized in that the lower attaching place (6)
is disposed substantially between the centre and
the lower third of the vertical extension of the side
luggage holder (1).

5. A side luggage holder according to claim 1,
characterized in that the lower attaching place (6)
is disposed in the centre between the vertical
struts (7, 8).

6. A side luggage holder according to claim 1,
characterized in that the lower attaching place (6)
has a connecting member (33, 68) for retaining
the free ends (31, 32) adjacent the lower attaching
place (6) of the supporting arms (27, 28).

7. A side luggage holder according to claim 6,
characterized in that the free ends·(31, 32) of the
supporting arms (27, 28) adjacent the lower connecting place (6) extend parallel spaced out from
one another, and the connecting member (33, 68)
contains two parallel bores (39, 41, 69, 71) which
are spaced out from one another and in which the free ends (31, 32) of the supporting arms (27, 28)
are attached.

8. A side luggage holder according to claim 7,
characterized in that the bores (39, 41) for the
supporting arms (28, 29) are unslotted and are
each intersected by a cylindrical stepped bore
(43) which extends at right angles thereto and in
whose portion (44) of major diameter a conical
clamping member (45) with a coaxially screw-
threaded bore (46) is disposed, into which a cap
screw (47) extending through the portion of
minor diameter can be screwed, the cap screw
forcing the clamping member (45) against the
supporting arms (31, 32).

9. A side luggage holder according to claim 7,
characterized in that the bores (69, 71) for the
supporting arms (27, 28) are continuously longitudinally slotted, and the free ends (31, 32) of the
supporting arms (27, 28) contain internally screw-
threaded transverse bores (72, 73) which extend
at right angles to the longitudinal axes of the
supporting arms (27, 28) and are in alignment
with the longitudinal slot (74, 75) of the particular
associated bore (69, 71) and into which a locking
screw (76, 77) bearing against the opposite inside
wall of the bore (69, 71) is screwed.

10. A side luggage holder according to claim 7,
characterized in that the connecting member (33,
68) is rigidly attached non-releasably, preferably
by means of a crimp connection (81, 82), to the
free ends of the supporting arms (27, 28).

11. A side luggage holder according to claims
2 and 7, characterized in that the connecting
member (33, 68) has a bore (49) which extends at
right angles to the bores (39, 41, 69, 71) for the
supporting arms (27, 28) and is in alignment with
the bore (52, 52') in the connecting strut (11).

12. A side luggage holder according to claim 6,
characterized in that in the assembled state the
connecting member (33, 68) is disposed between
the fork (2) and the connecting strut (11).

13. A side luggage holder according to claim 1,
characterized in that the supporting arms (27, 28)
are interconnected at their ends adjacent the
cross struts (23, 24) to an upper connecting
member (34, 80, 83) which is rigidly attached to
the supporting arms (27, 28).

14. A side luggage holder according to claim
13, characterized in that the supporting arms (27,
28) extend in parallel at a distance from one
another throughout their length, and the upper
connecting member (80) contains two continuous
parallel receiving bores through which the supporting arms (27, 28) extend, and the connecting
member (80) is connected non-releasably, preferably by a crimp connection, to the supporting
arms (27, 28).

15. A side luggage holder according to claim 1,
characterized in that the upper attaching device
(5) comprises a plate (83) which is attached,
preferably welded, on the one hand to the cross
struts (23, 24) and on the other hand to the
vertically extending struts (7, 8) in a portion
adjacent the cross struts (23, 24) and which
contains at least one slot (90, 90') for receiving an attaching screw (91).

16. A side luggage holder according to claims 13 and 15, characterized in that the upper connecting member is formed by the plate (83).

17. A side luggage holder according to claim 16, characterized in that the slot (90 90') extends parallel with the cross struts (23, 24).

18. A side luggage holder according to claim 1, characterized in that starting from their free ends (31, 32) the supporting arms (27, 28) diverge in the direction of the cross struts (23, 24), and the upper connecting member (34) is constructed in the form of a reinforcing strut forming the upper attaching device (5), with which a supporting strut (61) attached at the other end to the fork (2) adjustably engages.

19. A side luggage holder according to claim 18, characterized in that the reinforcing strut (34) contains for purposes of adjustability a slot (63) through which an attaching screw (64) extending through a bore (52) in the supporting strut extends.

20. A side luggage holder according to claim 19, characterized in that the reinforcing strut (34) and the slot (63) extend substantially parallel with the cross struts (23, 24).

21. A side luggage holder according to claim 1, characterized in that the unitarily interconnected struts (7, 8, 11, 23, 24, 27, 28, 31, 32) are formed by a correspondingly bent round wire.

22. A side luggage holder according to claim 21, characterized in that the round wire is made from an aluminium alloy.

23. A side luggage holder according to one of the preceding claims, characterized in that the lower connecting member (33, 68) contains a further receiving bore (101) for a supporting strut (99) of a front wheel luggage carrier.

**Revendications**

1. Porte-bagages latéral de roue avant pour bicyclettes, qui se compose d'un agencement de montants comprenant deux montants qui, en position d'utilisation, s'étendent de façon sensiblement verticale et à peu près parallèlement à un plan coupant à angle droit l'axe avant de la bicyclette, et des dispositifs de fixation inférieur et supérieur qui permettent de fixer en deux endroits l'agencement de montants à la branche adjacente de la fourche de la roue avant, l'un des dispositifs de fixation se trouvant au niveau de l'axe avant et l'autre se trouvant au-dessus et à distance du premier dispositif, caractérisé par le fait que les deux montants verticaux (7, 8) sont reliés d'une seule pièce à leurs extrémités inférieures par une traverse de liaison (11) qui porte le dispositif de fixation inférieur (6), que les deux montants verticaux (7, 8) sont coudés à leurs extrémités supérieures en formant deux traverses (23, 24) qui sont alignées l'une avec l'autre et courbées à leur tour à leurs extrémités libres, en formant deux branches d'appui (27, 28), en direction du dispositif de fixation inférieur (6) sur lequel sont ancrées les branches d'appui (27, 28), que le dispositif de fixation supérieur (5) est prévu à proximité des traverses (23, 24) et que la traverse de liaison (11) est courbée vers le haut dans sa zone médiane, en direction des traverses (23, 24), en formant deux portions (12, 13) s'élevant vers le haut, de manière à ce que la traverse de liaison (11) forme un « W » avec les montants verticaux (7, 8), le point de fixation inférieur (6) se trouvant au sommet de la traverse de liaison (11).

2. Porte-bagages latéral selon la revendication 1, caractérisé par le fait que le point de fixation inférieur (6) présente un trou (52) qui est parallèle à l'axe de la roue avant et destiné à recevoir une vis de fixation (51).

3. Porte-bagages latéral selon la revendication 1, caractérisé par le fait qu'à leurs extrémités opposées au point de fixation inférieur (6), les deux portions (12, 13) s'élevant vers le haut sont reliées par une traverse de renforcement (16).

4. Porte-bagages latéral selon la revendication 1, caractérisé par le fait que le point de fixation inférieur (6) se trouve approximativement entre le milieu et le tiers inférieur de la dimension verticale du porte-bagages latéral (1).

5. Porte-bagages latéral selon la revendication 1, caractérisé par le fait que le point de fixation inférieur (6) se trouve au milieu entre les montants verticaux (7, 8).

6. Porte-bagages latéral selon la revendication 1, caractérisé par le fait que le point de fixation inférieur (6) présente une pièce de liaison (33, 68) pour le maintien des extrémités libres (31, 32), adjacentes au point de fixation inférieur (6), des branches d'appui (27, 28).

7. Porte-bagages latéral selon la revendication 6, caractérisé par le fait que les extrémités libres (31, 32), adjacentes au point de fixation inférieur (6), des branches d'appui (27, 28) s'étendent parallèlement à distance l'une de l'autre, et que la pièce de liaison (33, 68) possède deux trous (39, 41, 69, 71) parallèles et à distance l'un de l'autre, dans lesquels sont fixées les extrémités libres (31, 32) des branches d'appui (27, 28).

8. Porte-bagages latéral selon la revendication 7, caractérisé par le fait que les trous (39, 41) pour les branches d'appui (28, 29) ne sont pas fendus et sont chacun coupés par un trou étagé (43) cylindrique s'étendant perpendiculairement à ces trous, dans la portion (44) de plus grand diamètre auquel se trouve une clavette (45) en forme de cône avec un trou taraudé (46) coaxial dans lequel peut être vissée une vis à tête (47) qui passe par la portion de plus petit diamètre et appuie la clavette (45) contre la branche d'appui (31, 32).

9. Porte-bagages latéral selon la revendication 7, caractérisé par le fait que les trous (69, 71) pour les branches d'appui (27, 28) sont fendus sur toute leur longueur et que les extrémités libres (31, 32) des branches d'appui (27, 28) comportent des trous transversaux (72, 73) taraudés qui s'étendent perpendiculairement aux axes longitudinaux des branches d'appui (27, 28) et sont alignés avec la fente longitudinale (74, 75) du trou (69, 71) associé et dans lesquels est vissée une vis de serrage (76, 77) qui porte contre la paroi intérieure opposée du trou (69, 71).

10. Porte-bagages latéral selon la revendication 7, caractérisé par le fait que la pièce de liaison (33, 68) est fixée de manière rigide et inamovible, de préférence au moyen d'une liaison par sertissage (81, 82), aux extrémités libres des branches d'appui (27, 28).

11. Porte-bagages latéral selon les revendications 2 et 7, caractérisé par le fait que la pièce de liaison (33, 68) présente un trou (49) qui s'étend perpendiculairement aux trous (39, 41, 69, 71) pour les branches d'appui (27, 28) et est aligné avec le trou (52, 52') dans la traverse de liaison (11).

12. Porte-bagages latéral selon la revendication 6, caractérisé par le fait qu'à l'état monté, la pièce de liaison (33, 68) est disposée entre la fourche (2) et la traverse de liaison (11).

13. Porte-bagages latéral selon la revendication 1, caractérisé par le fait qu'à leurs extrémités adjacentes aux traverses (23, 24), les branches d'appui (27, 28) sont reliées entre elles par une pièce de liaison supérieure (34, 80, 83) qui est fixée de manière rigide aux branches d'appui (27, 28).

14. Porte-bagages latéral selon la revendication 13, caractérisé par le fait que les branches d'appui (27, 28) s'étendent sur toute leur longueur parallèlement l'une à l'autre et à distance l'une de l'autre et la pièce de liaison supérieure (80) comporte deux trous de passage parallèles, dans lesquels passent les branches d'appui (27, 28), et que la pièce de liaison (80) est fixée de manière inamovible, de préférence au moyen d'une liaison par sertissage, aux branches d'appui (27, 28).

15. Porte-bagages latéral selon la revendication 1, caractérisé par le fait que le dispositif de fixation supérieur (5) comprend une plaque (83) qui est fixée, de préférence par soudage, d'une part aux traverses (23, 24) et d'autre part à une portion, adjacente aux traverses (23, 24), des montants verticaux (7, 8), et qui présente au moins un trou oblong (90, 90') pour la réception d'une vis de fixation (91).

16. Porte-bagages latéral selon les revendications 13 et 15, caractérisé par le fait que l'organe de liaison supérieur est formé par la plaque (83).

17. Porte-bagages latéral selon la revendication 16, caractérisé par le fait que le trou oblong (90, 90') s'étend parallèlement aux traverses (23, 24).

18. Porte-bagages latéral selon la revendication 1, caractérisé par le fait que les branches d'appui (27, 28) divergent à partir de leurs extrémités libres (31, 32) en direction des traverses (23, 24) et la pièce de liaison supérieure (34) est réalisée comme traverse de renforcement qui forme le dispositif de fixation supérieur (5) sur lequel est en prise de manière réglable une traverse d'appui (61) qui est fixée par son autre extrémité à la fourche (2).

19. Porte-bagages latéral selon la revendication 18, caractérisé par le fait qu'afin d'obtenir un réglage, la traverse de renforcement (34) comporte un trou oblong (63) dans lequel passe une vis de fixation (64) qui traverse un trou (52) de la traverse d'appui.

20. Porte-bagages latéral selon la revendication 19, caractérisé par le fait que la traverse de renforcement (34) et le trou oblong (63) s'étendent de façon sensiblement parallèle aux traverses (23, 24).

21. Porte-bagages latéral selon la revendication 1, caractérisé par le fait que les montants, branches et traverses (7, 8, 11, 23, 24, 27, 28, 31, 32) reliés d'une seule pièce les uns aux autres sont formés par un fil métallique de section circulaire qui est courbé de manière correspondante.

22. Porte-bagages latéral selon la revendication 21, caractérisé par le fait que le fil de section circulaire est constitué d'un alliage d'aluminium.

23. Porte-bagages latéral selon l'une quelconque des revendications précédentes, caractérisé par le fait que la pièce de liaison inférieure (33, 68) comporte un trou de réception supplémentaire (101) pour une traverse d'appui (99) d'un porte-bagages de roue avant.

**Fig. 1**

*Fig. 2*

2

Fig. 3

Fig. 4

Fig.5

**Fig.6**

Fig. 7

6

Fig. 8

**Fig.9**